# EUROPÄISCHE PATENTSCHRIFT

(11) **EP 1 117 733 B1**
(45) Veröffentlichungstag und Bekanntmachung des Hinweises auf die Patenterteilung: **02.02.2005**
(21) Anmeldenummer: 99940020.3
(22) Anmeldetag: 17.07.1999
(51) Int. Cl.: C08J 7/12

(54) **ÜBERKRITISCHE FLUORIERUNG**
SUPERCRITICAL FLUORINATION
FLUORURATION SURCRITIQUE

(30) Priorität: 25.07.1998 DE 19833548
(43) Veröffentlichungstag der Anmeldung: 25.07.2001
(73) Patentinhaber: Messer Griesheim GmbH, 65933 Frankfurt am Main (DE)
(72) Erfinder: ESCHWEY, Manfred, D-40489 Düsseldorf (DE); BERGER, Thomas, D-45219 Essen (DE); VAN BONN, Rolf, D-47269 Duisburg (DE)
(86) Internationale Anmeldenummer: PCT/EP1999/005110
(87) Internationale Veröffentlichungsnummer: WO 2000/006634

(56) Entgegenhaltungen:
- WO-A-98/11293
- WO-A-98/54397

## Beschreibung

Die Erfindung betrifft ein Verfahren zur Herstellung fluorierter Kunststoffoberflächen.

Die Fluorierung technischer Teile mit dem Ziel die Oberflächeneigenschaften gewöhnlichen Massenkunststoffe so zu verändern, daß sie einen höheren Gebrauchswert erfahren ist heute einer der wichtigsten Anwendung für elementares Fluor bzw. der davon abgeleiteten Fluorierungsmittel.

Die Fluorierung von Polyolefinen ist beschrieben in "Fluorination rates of polyolefines as a function of structure and gas atmosphere; R.D. Sanderson, F.J. du Toit, P.A.B. Carstens; J. Therm. Analysis Vol. 41 (1994) 563-581".

Die Veränderung nur oberflächennaher Bereiche ist zwar einerseits einer der Hauptvorteile der Gasphasenfluorierung (d. h. man erzeugt ein Fluorpolymer nur da, wo es gebraucht wird), anderseits ist in der Regel die Eindringtiefe der so erzeugten Schichten nicht besonders groß (in der Regel Bruchteile eines Mikrometers). Es handelt sich also um ein typisches OberflächenVeredelungsverfahren.

Allerdings lassen sich bestimmte Materialtypen oder Halbzeuge wie Schüttgüter, Vliesstoffe, Faserrollen um nur einige zu nennen aus leicht ersichtlichen Gründen nur sehr ungleichmäßig mit Hilfe von Gasphasenprozessen verändern, da die Reaktion diffusionskontrolliert verläuft: Dies hat zur Folge, daß die Reaktion das Innere einer Festbettschüttung oder eines anderen porösen Körpers gar nicht erreicht, während in den Außenbezirken das Material bereits vollständig durchreagiert bzw. zerstört ist.

Aufgabe der Erfindung ist es daher eine gleichmäßige Fluorierung von Kunststoffteilen zu gewährleisten, die sich durch eine große innere Oberfläche auszeichnen (z. B. Schüttgüter, Fasern, Gewebe). Gleichzeitig soll die "Eindringtiefe" der fluorierten Grenzschicht durch Wahl geeigneter Prozeßvariablen gesteuert und gegenüber einer reinen Gasphasenfluorierung verbessert werden.

Es wurde gefunden, daß sich ein Gasgemisch aus Kohlendioxid (CO₂) mit geringen Anteilen an Fluor, das sich mittels geeigneter Vorrichtungen (Pumpe/Druckpotster) relativ leicht in den überkritischen Zustand überführen werden läßt, zur gleichmäßigen und schonenden Fluorierung von Materialien und Halbzeugen eignet, die ansonsten nur schwer oder gar nicht zu fluorieren sind.

Gelöst wurde die Aufgabe durch ein Fluorierungsmittel mit den Merkmalen von Anspruch 1.

Weiterer Gegenstand der Erfindung ist ein Verfahren gemäß Anspruch 5 und eine Verwendung gemäß Anspruch 10.

Überkritische Flüssigkeiten beziehungsweise Gase, auch überkritisches Fluid genannt, erhält man, wenn man Flüssigkeiten und Gase unter Druck erhitzt bis sie oberhalb einer kritischen Temperatur und einem kritischen Druck in den sogenannten überkritischen Zustand übergehen.

Überkritische Fluide werden beispielsweise aus Kohlendioxid, Wasser, SF₆, Krypton oder Xenon gebildet.

Als überkritisches Gas ist Kohlendioxid besonders vorteilhaft als Medium für die Fluorierung mit einer Fluor-Quelle. Eine Fluor-Quelle ist elementares Fluor (F₂) oder eine Fluor-abgebende Substanz (z. B. XeF₂ , CIF₃, SF₄).

Bei der Fluorierung werden offenbar die besonderen Lösemitteleigenschaften eines solchen überkritischen Fluids genutzt, um Diffussionsbarrieren zu überwinden..

Das Fluorierungsmittel wird beispielsweise aus einem Gasgemisch hergestellt, das Fluor und ein Gas (z. B. Kohlendioxid) enthält, das in den überkritischen Zustand überführt wird. Der Anteil von Fluor in diesem Gasgemisch liegt in der Regel im Bereich von 0,01 bis 10 Vol.-%, vorzugsweise 0,01 bis 5 Vol.-% und besonders bevorzugt 0,01 bis 2 Vol.-%.

Fluorierungsmittel mit einem überkritischen Fluid können Gase enthalten, die unter den gegebenen Druck- und Temperaturbedingungen selbst nicht in den überkritischen Zustand übergehen. Ein solches Gas ist neben Fluor beispielsweise Sauerstoff.

Bei manchen Anwendungen ist es vorteilhaft, daß das Fluorierungsmittel Sauerstoff enthält. Z. B. kann ein Gasgemisch aus 0,01 bis 10 Vol.-% Fluor, 0,01 bis 10 Vol.-% Sauerstoff und einem Restanteil Kohlendioxid (insgesamt 100 Vol.-%) zur Modifizierung von Kunststoffoberflächen eingesetzt werden. Für viele Anwendungen ist ein Sauerstoffgehalt im Ausgangsgasgemisch im Bereich von 0,1 bis 2 Vol.-% vorteilhaft.

Der Einsatz des Fluorierungsmittels gemäß der Erfindung wird auch als überkritische Fluorierung bezeichnet.

Die Fluorierung wird bei allen fluorierbaren Kunststoffen eingesetzt, z. B. bei Polyolefinen (z. B. Polyethylen, Polypropylen, Polystyrol), Polyester (z. B. PET, PBT), fluorhaltige Kunststoffe (z. B. Polyethylen-tetrafluorethylen, Polyvinylidenfluorid), Polyacetal.

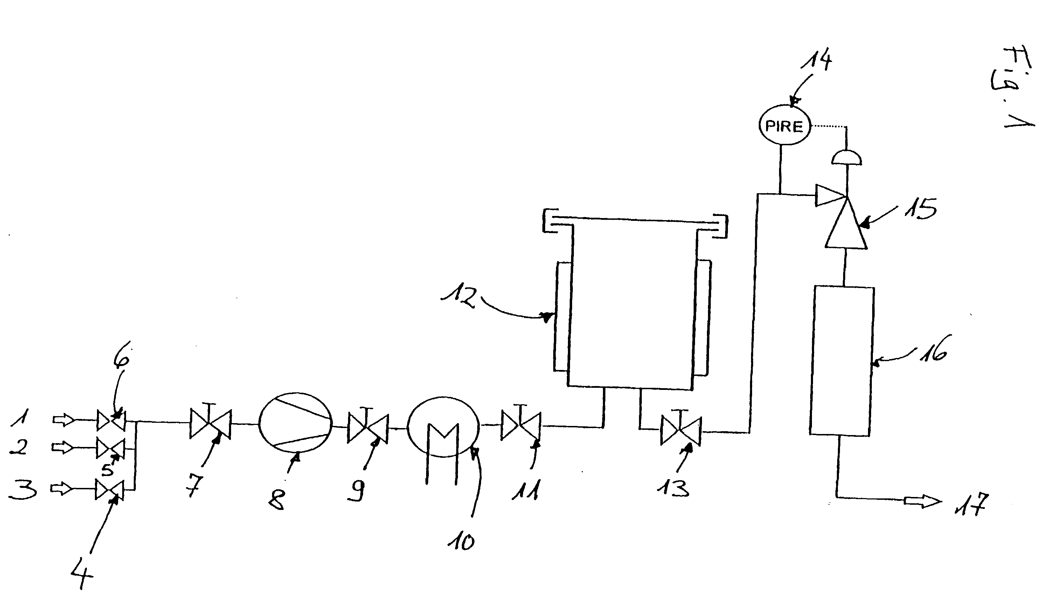

Der prinzipielle Aufbau einer geeigneten Apparatur ergibt sich aus Fig. 1.

Wie die folgenden Beispielen zeigen, stellt die überkritische Fluorierung eine wichtige Ergänzung zur Gasphasenfluorierung technischer Kunststoffteile dar bzw. wird mit Vorteil immer da eingesetzt, wo sich für die klassische Offline-Fluorierung Probleme ergeben, z. B. Kleinteile, Folien, Polymergranulate, Schäume, Vliesstoffe, Fasern, Garne, Rollen- und Bahnenmaterial, Textilien. Die Teile werden zu diesem Zweck in den Autoklaven verbracht und bei überkritischen Bedingungen d.h. im Falle von CO₂ (Kohlendioxid) bei Temperaturen von über 31°C und Drücken über 74 Bar mit einem CO₂ / F₂-Fluidgemisch behandelt. CO₂ ist unter wirtschaftlichen und technischen Aspekten in der Regel den Vorzug zu geben, jedoch können durchaus auch andere Gase zum Einsatz gelangen, deren kritische Temperaturen sich innerhalb des technisch relevanten Bereichs, d. h. zwischen -70°C und +60°C bewegen. Erfindungsgemäß kann diesem Behandlungsschritt ein Reinigungsschritt mit reinem CO₂ vorgeschaltet werden, um z. B. unerwünschte Verunreinigungen auf der Oberfläche zu beseitigen. Ebenso kann ein Nachbehandlungsschritt unter überkritischen Bedingungen sich als hilfreich erweisen. Der Einbau funktioneller Gruppen in das Polymergerüst kann durch Zusatz von weiteren reaktiven Komponenten im Fluorierungsmittel wie Sauerstoff begünstigt werden. (s. Ausführungsbeispiel).

Zum Nachweis einer im mikroskopischen Bereichen gleichmäßigen Fluorierung bzw. Funktionalisierung wurden Faservliesstoffe ausgewählt, die als Batterieseperatoren für Hochleistungsbatterien zum Einsatz gelangen. Hierbei kommt es auf eine dauerhafte und gleichmäßige Verbesserung der Benetzbarkeit des unpolaren Faservlieses durch den Elektrolyten, z. B eine 30 %-ige Kalilauge, an.

Das Material, ein Gewirke aus Polyethylenfasern mit einem Polypropylen Kern liegt im Ausführungsbeispiel aufgerollt als Bahnenware vor: Länge: 200 m, Breite: 0,45m, Dicke des Vlieses: 0,2 mm, Durchmesser der Rolle: Ca. 0,2 m. Die Rollen wurde in Gänze in den Autoklaven verbracht und unter folgenden Bedingungen fluoriert:

| Rolle Nr. | F₂ Konz. *l* Vol.-% | O₂-Konz. / Vol.-% | CO₂ Druck *l* bar | Temperatur / ° C | Einwirkzeit / Minuten |
|---|---|---|---|---|---|
| 1 | 2 | <0.1 | 300 | 40 | 30 |
| 2 | 1 | <0,01 | 200 | 40 | 30 |
| 3 | 2 | 2 | 300 | 40 | 30 |
| 4 | 1 | 1 | 300 | 40 | 30 |
| 5 | 1 | 1 | 200 | 40 | 30 |
| 6 | 0,1 | <0,01 | 200 | 40 | 30 |
| 7 | 0,1 | 1 | 200 | 40 | 30 |
| 8 | 0,01 | 1 | 200 | 40 | 30 |

Nach der Behandlung wurden die Rollen abgewickelt. Alle 20 m wurden quer zur Längsrichtung 2 cm dicke Streifen herausgeschnitten, aus deren Mitte Probestücke mit einer Länge von ca. 5 cm entnommen wurden. Die Streifen wurden anschließend senkrecht in eine Küvette gestellt, deren Boden mit 30%iger KOH bedeckt ist. Bedingt durch die Güte der Benetzbarkeit steigt der Elektrolyt unterschiedlich hoch. Die Bewertung erfolgt einheitlich nach 10 min. Die Ergebnisse sind in nachstehender Tabelle aufgeführt:

| Rolle Nr. | 0* | 1 | 2 | 3 | 4 | 5 | 6 | 7 | 8 |
|---|---|---|---|---|---|---|---|---|---|
| Höhe der Elektrolyt-front (mm); außen | 0 | 18 | 16 | 25 | 23 | 23 | 10 | 21 | 19 |
| Nach: 20 m | 0 | 17 | 16 | 25 | 23 | 23 | 9 | 19 | 17 |
| 40 m | 0 | 17 | 15 | 25 | 23 | 23 | 8 | 20 | 18 |
| 60 m | 0 | 18 | 15 | 23 | 22 | 22 | 9 | 20 | 17 |
| 80m | 0 | 17 | 15 | 24 | 24 | 21 | 9 | 19 | 17 |
| 100m | 0 | 16 | 13 | 23 | 22 | 22 | 7 | 18 | 17 |
| 120 m | 0 | 17 | 14 | 24 | 22 | 22 | 7 | 19 | 17 |
| 140 m | 0 | 18 | 14 | 23 | 21 | 21 | 7 | 18 | 16 |
| 160 m | 0 | 16 | 14 | 22 | 21 | 21 | 8 | 18 | 16 |
| 180 m | 0 | 16 | 13 | 22 | 21 | 21 | 7 | 18 | 16 |
| 200 m; innen (Kern) | 0 | 16 | 13 | 22 | 22 | 21 | 7 | 18 | 15 |

| | | | | | | | | | |
|---|---|---|---|---|---|---|---|---|---|
| *unbehandelt | | | | | | | | | |

### Bezugszeichenliste

- 1: Druckgasquelle 1 (Kohlendioxid)
- 2: Druckgasquelle 2 (Stickstoff)
- 3: Druckgasquelle 3 (Fluor)
- 4, 5, 6: Absperrventil
- 7, 9, 11, 13: Absperrventil
- 8: Pumpe oder Kompressor
- 10: Wärmetauscher
- 12: Autoklav
- 14: Druckregler
- 15: steuerbares Druckhalteventil
- 16: Absorber (Filtereinheit)
- 17: Abgas

## Patentansprüche

1. Fluorierungsmittel, bestehend aus einer überkritischen Phase, die ein Gas oder Gasgemisch im überkritischen Zustand und elementares Fluor (F₂) oder eine Fluor-abgebende Substanz enthält.

2. Fluorierungsmittel nach Anspruch 1, **dadurch gekennzeichnet, daß** als Fluor-abgebende Substanz XeF₂ , ClF₃ oder SF₄ enthalten ist.

3. Fluorierungsmittel nach Anspruch 1 oder 2, **dadurch gekennzeichnet, daß** Kohlendioxid als Hauptkomponente der überkritischen Gasphase oder eine überkritische Phase, gebildet aus Wasser, SF₆, Krypton oder Xenon, eingesetzt wird.

4. Fluorierungsmittel einem der Ansprüche 1 bis 3, **dadurch gekennzeichnet, daß** das Fluorierungsmittel das Gas Sauerstoff enthält.

5. Verfahren zur Fluorierung von Kunststoffoberflächen **dadurch gekennzeichnet, daß** die Kunststoffoberflächen zur Fluorierung mit einer flüssigen Phase behandelt werden, die ein Gas oder Gasgemisch im überkritischen Zustand und elementares Fluor (F₂) oder eine Fluor-abgebende Substanz enthält.

6. Verfahren nach Anspruch 5, **dadurch gekennzeichnet, daß** als Fluor-abgebende Substanz XeF₂ , ClF₃ oder SF₄ eingesetzt wird.

7. Verfahren nach Anspruch 5 oder 6, **dadurch gekennzeichnet, daß** die flüssige Phase ein oder mehrere Gase enthält, deren kritische Temperaturen zwischen minus 70°C und 60° C und deren kritische Drücke zwischen 25 und 100 bar liegen und zur Bildung eines Gases oder Gasgemisches im überkritischen Zustand dienen.

8. Verfahren nach einem der Ansprüche 5 bis 7, **dadurch gekennzeichnet, daß** die flüssige Phase überkritisches Kohlendioxid enthält.

9. Verfahren nach einem der Ansprüche 5 bis 8, **dadurch gekennzeichnet, daß** die flüssige Phase Sauerstoff oder andere unter den Verfahrensbedingungen permanente Gase enthält.

10. Verwendung von einem Gas oder Gasgemisch im überkritischen Zustand, das elementares Fluor (F₂) oder eine Fluor-abgebende Substanz enthält, zur Fluorierung von Kunststoffen oder Kunststoffoberflächen.

11. Verwendung nach Anspruch 10, **dadurch gekennzeichnet, daß** als Fluor-abgebende Substanz XeF₂ , ClF₃ oder SF₄ eingesetzt wird.

12. Verwendung nach Anspruch 10 oder 11, **dadurch gekennzeichnet, daß** Kohlendioxid als Gas im überkritischen Zustand eingesetzt wird.

## Claims

1. Fluorinating agent consisting of a supercritical phase which comprises a gas or gas mixture in the supercritical state and elemental fluorine (F₂) or a fluorine-releasing substance.

2. Fluorinating agent according to Claim 1, **characterized in that** the fluorine-releasing substance present is XeF₂, ClF₃ or SF₄.

3. Fluorinating agent according to Claim 1 or 2, **characterized in that** carbon dioxide is employed as the principal component of the supercritical gas phase or a supercritical phase formed from water, SF₆, krypton or xenon.

4. Fluorinating agent according to any of Claims 1 to 3, **characterized in that** the fluorinating agent comprises the gas oxygen.

5. Process for the fluorination of plastic surfaces, **characterized in that** the plastic surfaces are, for fluorination, treated with a liquid phase which comprises a gas or gas mixture in the supercritical state and elemental fluorine (F₂) or a fluorine-releasing substance.

6. Process according to Claim 5, **characterized in that** the fluorine-releasing substance employed is XeF₂, ClF₃ or SF₄.

7. Process according to Claim 5 or 6, **characterized in that** the liquid phase comprises one or more gases whose critical temperatures are from minus 70°C to 60°C and whose critical pressures are from 25 to 100 bar and serve for the formation of a gas or gas mixture in the supercritical state.

8. Process according to any of Claims 5 to 7, **characterized in that** the liquid phase comprises supercritical carbon dioxide.

9. Process according to any of Claims 5 to 8, **characterized in that** the liquid phase comprises oxygen or other gases which are permanent under the process conditions.

10. Use of a gas or gas mixture in the supercritical state which comprises elemental fluorine (F₂) or a fluorine-releasing substance for the fluorination of plastics or plastic surfaces.

11. Use according to Claim 10, **characterized in that** the fluorine-releasing substance employed is XeF₂, ClF₃ or SF₄.

12. Use according to Claim 10 or 11, **characterized in that** carbon dioxide is employed as the gas in the supercritical state.

## Revendications

1. Agent de fluoration consistant en une phase supercritique, contenant un gaz ou un mélange de gaz à l'état supercritique et du fluor élémentaire (F₂) ou une substance libérant du fluor.

2. Agent de fluoration selon la revendication 1, **caractérisé en ce qu'**il contient en tant que substance libérant du fluor du XeF₂, du ClF₃ ou du SF₄.

3. Agent de fluoration selon la revendication 1 ou 2, **caractérisé en ce que** l'on met en oeuvre du dioxyde de carbone en tant que principal composant de la phase gazeuse supercritique, ou bien une phase supercritique constituée d'eau, de SF₆, de krypton ou de xénon.

4. Agent de fluoration selon l'une quelconque des revendications 1 à 3, **caractérisé en ce que** l'agent de fluoration contient de l'oxygène gazeux.

5. Procédé de fluoration de surfaces de plastique, **caractérisé en ce que** les surfaces de plastique sont, aux fins de fluoration, traitées par une phase liquide contenant un gaz ou un mélange de gaz à l'état supercritique et du fluor élémentaire (F₂) ou une substance libérant du fluor.

6. Procédé selon la revendication 5, **caractérisé en ce que** l'on met en oeuvre comme substance libérant du fluor du XeF₂, du ClF₃ ou du SF₄.

7. Procédé selon la revendication 5 ou 6, **caractérisé en ce que** la phase liquide contient un ou plusieurs gaz dont les températures critiques se situent entre -70°C et 60°C et dont les pressions critiques se situent entre 25 et 100 bars, et qui servent à la formation d'un gaz ou d'un mélange de gaz à l'état supercritique.

8. Procédé selon l'une quelconque des revendications 5 à 7, **caractérisé en ce que** la phase liquide contient du dioxyde de carbone supercritique.

9. Procédé selon l'une quelconque des revendications 5 à 8, **caractérisé en ce que** la phase liquide contient de l'oxygène ou d'autres gaz permanents dans les conditions du procédé.

10. Utilisation d'un gaz ou d'un mélange de gaz à l'état supercritique, contenant du fluor élémentaire (F₂) ou une substance libérant du fluor, pour la fluoration de plastiques ou de surfaces de plastique.

11. Utilisation selon la revendication 10, **caractérisée en ce que** l'on met en oeuvre comme substance libérant du fluor du XeF₂, du ClF₃ ou du SF₄.

12. Utilisation selon la revendication 10 ou 11, **caractérisée en ce que** l'on met en oeuvre du dioxyde de carbone en tant que gaz à l'état supercritique.
